# DEMANDE DE BREVET EUROPEEN

(11) **EP 4 667 135 A1**
(43) Date de publication de la demande: **24.12.2025**
(21) Numéro de dépôt: 25178003.7
(22) Date de dépôt: 21.05.2025
(51) Int. Cl.: B22F 1/145, B22F 9/14, B22F 9/08, B33Y 70/00, C22C 1/04

(54) **PROCÉDÉ DE FABRICATION DE POUDRE**

(30) Priorité: 14.06.2024 FR 2406344
(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: MANDOU, Quentin, 78350 Jouy en Josas (FR); LEFEBVRE, Philippe, 78350 Jouy en Josas (FR); GUILLAUME, Lucie, 78350 Jouy en Josas (FR)
(74) Mandataire: Air Liquide

(57) **Abrégé**

L'invention concerne un procédé de fabrication (100) de poudre à partir d'un premier matériau et d'un deuxième matériau (1a, 1b) comprenant : une étape de fusion des premier et deuxième matériaux au moyen d'un arc électrique (314), une étape de pulvérisation des premier et deuxième matériaux fondus de manière à former des gouttelettes (2), une étape de refroidissement des gouttelettes au moyen d'un gaz vecteur (11) de manière à former des particules solides, une étape de séparation des particules solides du gaz vecteur et de collecte des particules solides de façon à former la poudre (5), le courant électrique appliqué pour former l'arc électrique étant un courant de court-circuit.

## Description

La présente invention porte sur un procédé de fabrication de poudre, et plus particulièrement sur un procédé de fabrication de poudre destinée à un procédé de fabrication additive.

On connait de l'art antérieur des procédés de fabrication de poudre, par exemple le procédé EIGA (acronyme en anglais pour Electrode Induction melting Gas Atomization). Ce procédé permet de fondre le matériau d'un barreau métallique à rotation lente par une bobine d'induction à haute fréquence. Il se forme alors un flux de liquide qui s'écoule à travers une buse d'atomisation. Le flux est alors brisé et solidifié par un flux de gaz pulsé à grande vitesse provenant de la buse d'atomisation pour former de fines particules de poudre. Ces procédés de l'art antérieur permettent d'obtenir des poudres sphériques en matériau métallique en limitant les pollutions du matériau composant les poudres obtenues. Cependant ces procédés, comme le procédé EIGA, consomment beaucoup d'énergie et ne sont pas simples à mettre en œuvre. Par ailleurs, la répartition granulométrique des poudres obtenue n'est pas bien contrôlable.

On connait aussi de la demande EP4221916A1, un procédé de fabrication de poudres métalliques à partir d'un premier matériau et d'un deuxième matériau, le procédé de fabrication comprenant notamment une étape de fusion des matériaux, au moyen d'un arc électrique, une étape de pulvérisation des matériaux fondus de manière à former des gouttelettes, une étape de refroidissement des gouttelettes au moyen d'un gaz vecteur de manière à former des particules solides et une étape de séparation des particules solides du gaz vecteur et de collecte des particules solides de façon à former la poudre.

Ce procédé divulgué ne permet pas d'obtenir une répartition granulométrique satisfaisante, c'est-à-dire une répartition granulométrique qui soit suffisamment contrôlée. Cette poudre ainsi produite nécessite des étapes de séparation supplémentaires et le procédé devient couteux à mettre en œuvre pour obtenir une répartition granulométrique contrôlée, c'est-à-dire adapté à l'usage de la poudre souhaité par un utilisateur.

La présente invention vise à remédier efficacement aux inconvénients de l'art antérieur en proposant un procédé de fabrication de poudre amélioré qui permette d'obtenir une poudre avec une granulométrie mieux contrôlée tout en obtenant une qualité de matière conforme en terme de composition matière.

L'invention concerne un procédé de fabrication de poudre à partir d'un premier matériau et d'un deuxième matériau, comprenant :
- une étape de fusion des premier et deuxième matériaux, au moyen d'un arc électrique formé par l'application d'un courant électrique entre lesdits premier et deuxième matériaux ;
- une étape de pulvérisation des premier et deuxième matériaux fondus de manière à former des gouttelettes ;
- une étape de refroidissement des gouttelettes au moyen d'un gaz vecteur de manière à former des particules solides ;
- une étape de séparation des particules solides du gaz vecteur et de collecte des particules solides de façon à former la poudre ;
ledit procédé de fabrication étant caractérisé en ce que ledit courant électrique appliqué est un courant de court-circuit.

Selon une réalisation, le courant électrique de court-circuit présente une première tension comprise entre 10 V et 30 V, de préférence entre 11 V et 20 V, de préférence encore entre 14 V et 19 V.

Selon une réalisation, le court-circuit présente une fréquence comprise entre 40 et 200 Hz.

Selon une réalisation, les étapes de fusion et de pulvérisation sont réalisées sous gaz neutre, par exemple sous argon, à une pression entre 4 et 12 bar, de préférence entre 6 et 10 bar.

Selon une réalisation, le courant électrique appliqué présente une intensité comprise 50 et 400 A, de préférence entre 150 et 250 A, de préférence encore entre 180 et 220 A.

Selon une réalisation, les premier et deuxième matériaux sont distribués à une vitesse de distribution et l'intensité du courant est déterminée en fonction de ladite vitesse de distribution desdits premier et deuxième matériaux.

Selon une réalisation, les premier et deuxième matériaux sont distribués à une vitesse comprise entre 5 et 10 m/min.

Selon une réalisation, les étapes de fusion et de pulvérisation sont répétées au moins une fois et ledit courant électrique appliqué présente une deuxième tension différente de ladite première tension dudit courant appliqué.

Selon une réalisation, le procédé de fabrication comprend une étape additionnelle d'analyse de la poudre pour déterminer la densité de ladite poudre et/ou la teneur en oxygène de ladite poudre et/ou la granulométrie de ladite poudre.

Selon une réalisation, le procédé de fabrication comprend une étape d'enrichissement des gouttelettes et/ou des particules au moyen d'une substance active, mise en œuvre pendant l'étape de refroidissement, l'étape d'enrichissement étant précédée d'une étape d'ionisation de la substance active.

Selon une réalisation, l'étape d'enrichissement est mise en œuvre pendant les étapes de pulvérisation et de refroidissement.

Selon une réalisation, l'étape de refroidissement est réalisée au moyen d'un gaz de refroidissement.

Selon une réalisation, la substance active comprend :
- au moins un gaz neutre ; et
- au moins un composé actif comprenant au moins l'un des atomes suivants : oxygène, azote, carbone ou hydrogène ; chaque composé actif étant en phase gazeuse, liquide ou solide, la teneur de chaque composé actif étant comprise entre 5 ppm et 20000 ppm.

L'invention sera mieux comprise à la lecture de la description qui suit et à l'examen des figures qui l'accompagnent. Ces figures ne sont données qu'à titre illustratif mais nullement limitatif de l'invention.
Fig. 1 est une représentation schématique d'un dispositif de l'art antérieur mettant en œuvre l'invention.
Fig. 2 est une représentation schématique du procédé de fabrication des poudres selon l'invention.
Fig. 3 est une représentation schématique des valeurs de tension et de l'intensité pendant le procédé de fabrication d'un mode de réalisation de l'invention.
Fig. 4 est une représentation schématique d'un dispositif de distribution du procédé de l'invention.

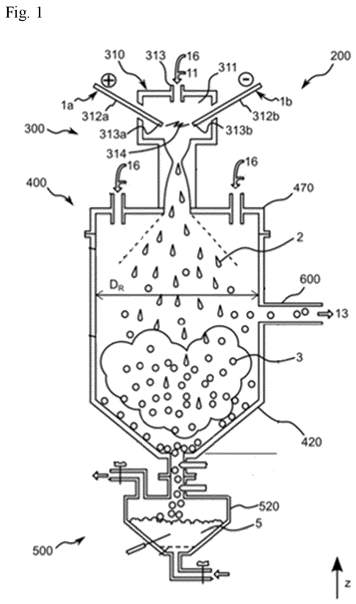

Fig. 1 présente un dispositif de fabrication 200 configuré pour mettre en œuvre le procédé de fabrication 100 selon l'invention. Ce dispositif de fabrication 200 comporte au moins : un moyen de pulvérisation 300 ; une chambre d'atomisation 400 ; un premier moyen de collecte 500 ; et un moyen d'échappement 600. Ce dispositif de fabrication 200 peut également comporter des éléments complémentaires, non représentés, tels que : un système de séparation gaz/particules ; et un deuxième moyen de collecte.

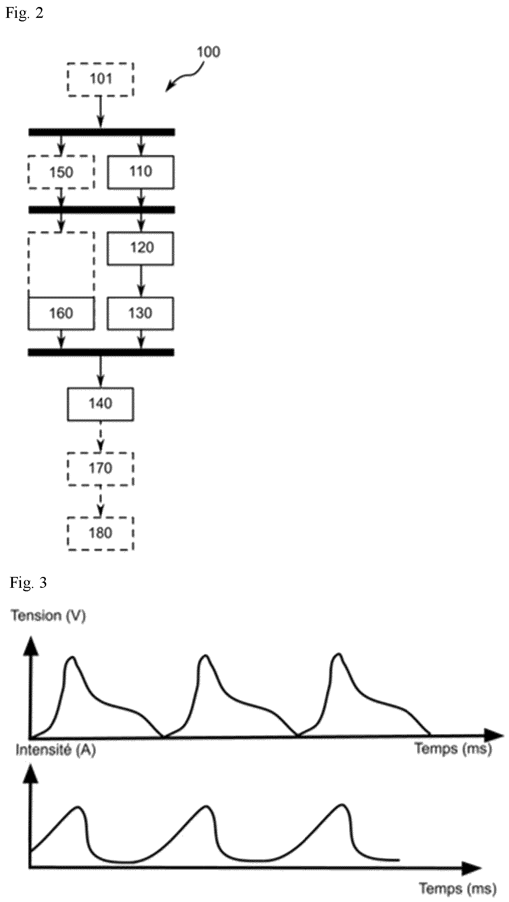

En référence à Fig. 2, le procédé de fabrication 100 comporte au moins les étapes suivantes : une étape de fusion 110 de deux matériaux 1a, 1b au moyen d'un arc électrique 314 ; une étape de pulvérisation 120 de chaque matériau 1a, 1b de manière à former des gouttelettes 2 ; une étape de refroidissement 130 des gouttelettes 2, au moyen d'un gaz vecteur 11 , de manière à former des particules solides 3 ; et une étape séparation des particules 3 du gaz vecteur 11 et de collecte 140 des particules solides 3 de façon à former une première et une deuxième poudre 5.

Chaque matériau 1a, 1b est un conducteur électrique. Il peut par exemple être un métal pur tel que du titane ou de l'aluminium ou un alliage tel qu'un alliage à base de titane, un alliage à base d'aluminium, un alliage à base de nickel, un alliage à base de cuivre ou un alliage à base de fer. Les matériaux 1a, 1b peuvent être de même nature voire même identiques. Le choix de la composition de chaque matériau 1a, 1b détermine en partie la composition des poudres 5 obtenues. Dans un mode de réalisation ledit premier ou deuxième matériau est un alliage Ti6Al4V. Ces matériaux 1a, 1b sont fournis respectivement sous forme de fils conducteurs 312a, 312b et distribués vers le moyen de pulvérisation 300 présenté par Fig. 1, et plus précisément dans l'enceinte 311 par un système de dévidage, non représenté, par exemple à une vitesse prédéfinie. Dans un mode de réalisation, le diamètre des fils 312a, 312b est compris entre 0.8 et 2 mm, de préférence entre 1.2 et 2 mm. Ainsi les fils sont aisément manipulables.

Lors de l'étape de fusion 110, ce moyen de pulvérisation 300 est configuré pour réaliser l'étape de fusion 110 de chaque matériau 1a, 1b au moyen d'un arc électrique 314. Le moyen de pulvérisation 300 comporte une source d'arc électrique 310, également appelée torche arc-fil. La torche arc-fil 310 est configurée pour générer un arc électrique 314. L'arc électrique 314 peut être crée à partir du gaz vecteur 11, tel que l'argon, l'azote ou l'hélium ou encore un mélange de ces gaz. La torche arc-fil 310 comporte une enceinte 311, remplie du gaz vecteur 11, dans laquelle l'arc électrique 314 est généré. La pression du gaz vecteur 11 dans l'enceinte 311 peut être supérieure ou égale à la pression atmosphérique. La torche arc-fil 310 est configurée pour générer l'arc électrique 314 entre le premier matériau 1a et le deuxième matériau 1b. La torche arc-fil comporte les deux fils conducteurs 312a, 312b, disposés de part et d'autre de l'enceinte 311, séparés l'un de l'autre et configurés pour amorcer et entretenir l'arc électrique 314 au moyen du courant électrique. En fonctionnement, la distance entre les deux fils conducteurs 312a, 312b est préférentiellement maintenue inférieure à 5 mm et dépend de l'énergie délivrée. Lorsque la torche arc-fil 310 est en fonctionnement, l'arc électrique 314 est localisé au voisinage des deux extrémités en vis-à-vis 313a, 313b des deux fils 312a, 312b. Le gaz vecteur 11 est introduit en jet dans l'enceinte 311 par une entrée 313. Le j et de gaz vecteur 11 est configuré pour frapper les extrémités 313a, 313b des deux fils 312a, 312b. Dans un mode de réalisation, le moyen de pulvérisation 300 comprend plusieurs torches arc-fil 310 permettant d'augmenter la quantité de poudre générée par le dispositif de fabrication 200. Lors de cette étape de fusion 110, le régime de fonctionnement de la torche arc-fil 310 est choisi tel que la température du plasma au niveau de l'arc électrique 314 soit supérieure à la température de fusion de chaque matériau 1a, 1b. Ainsi, en fonctionnement, ledit plasma met en fusion les extrémités 313a, 313b des deux fils 312a, 312b.

L'étape de pulvérisation 120 est aussi réalisée avec le moyen de pulvérisation 300. L'étape de pulvérisation 120 de chaque matériau 1a, 1b à partir des extrémités 313a, 313b liquéfiées, permet la formation des gouttelettes 2. Lors de cette étape de pulvérisation 120, le jet de gaz vecteur 11 est porté directement sur les extrémités 313a, 313b liquéfiées des fils 312a, 312b de façon à pulvériser les extrémités 313a, 313b mises en fusion et créer les gouttelettes 2. Afin de conserver un espacement fixe entre les extrémités 313a et 313b malgré la pulvérisation de matière, les fils 312a, 312b sont toujours introduits dans l'enceinte 311 par un système de dévidage, non représenté, à une vitesse prédéfinie.

Fig 1. présente schématiquement la chambre d'atomisation 400 et le moyen d'échappement 600, configurés de manière à réaliser l'étape de refroidissement 130 des gouttelettes 2, au moyen du gaz vecteur 11, de manière à former les particules solides 3. Dans un mode de réalisation, afin d'accélérer le refroidissement 130, un gaz de refroidissement 12 peut être injecté dans la chambre d'atomisation 400. Le gaz de refroidissement 12 en contact avec le gaz vecteur forme un mélange de gaz 13. Ainsi lors de l'étape de refroidissement 130, les gouttelettes 2, au contact du mélange de gaz 13, établissent un transfert de chaleur avec le mélange de gaz 13. De préférence, la température du gaz de refroidissement 12 injecté est choisie telle qu'elle soit inférieure à la plus faible des températures de solidification des matériaux 1a, 1b ou des alliages formés par les matériaux 1a, 1b au sein des gouttelettes 2. Le mélange de refroidissement 12 est par exemple injecté à température ambiante. Ainsi, le gaz vecteur 11 détendu et le gaz de refroidissement 12 froid créent un transfert de chaleur des gouttelettes 2 vers le mélange de gaz 13, refroidissant les gouttelettes 2. Lorsque la température des gouttelettes 2 est inférieure à la température de solidification des gouttelettes 2, les gouttelettes 2 se solidifient de manière à former les particules solides 3. L'étape de refroidissement 130 permet aux gouttelettes 2 de se sphéroïdiser, c'est à dire qu'elles adoptent une forme sphérique grâce à la tension superficielle à la surface des gouttelettes 2 fondues et l'interaction avec le mélange de gaz 13. Ainsi, en se solidifiant, les gouttelettes 2 forment des particules 3 dont la sphéricité est supérieure à 0,9 et le plus proche possible de 1.

Le procédé de fabrication 100 peut également comprendre une étape d'enrichissement 160 des gouttelettes 2 ou/et des particules 3. L'enrichissement 160 est réalisé au moyen d'une substance active 16. L'enrichissement 160 est au moins mis en oeuvre lors de l'étape de refroidissement 130. Toutefois, l'enrichissement 160 peut également débuter lors de la pulvérisation 120 pour se poursuivre lors du refroidissement 130. Par "enrichissement", nous entendons un traitement métallurgique des matériaux 1a, 1b et des alliages formés au sein des gouttelettes 2 au moyen d'une substance active 16 de façon à apporter des caractéristiques physico-chimiques particulières aux particules 3 résultantes.

La substance active 16 mise en oeuvre dans l'étape d'enrichissement 160 comporte : au moins un gaz neutre, avantageusement de même composition que le gaz vecteur 11 ; et au moins un composé actif comprenant au moins l'un des atomes suivants : oxygène, azote, carbone ou hydrogène. Chaque composé actif peut être en phase gazeuse, liquide ou solide, par exemple, présent sous forme de gouttelettes ou de particules en suspension. La teneur de chaque composé actif au sein de de la substance active 16 est comprise entre 5 ppm et 20000 ppm et de préférence entre 5 ppm et 1000 ppm. Il peut par exemple s'agit de monoxyde de carbone ou d'hydrogène. Le composé actif de la substance active 16 peut être un hydrocarbure, tel que du méthane, riche en carbone et en hydrogène. Dans le cas où la substance active 16 comporte du monoxyde de carbone ou du méthane, l'enrichissement 160 correspond à une carburation des matériaux 1a, 1b. Dans le cas où la substance active 16 comporte de l'azote, l'enrichissement 160 correspond à une nitruration. Dans le cas où la substance active 16 comporte de l'oxygène ou de l'hydrogène, l'enrichissement 160 correspond à une oxydation ou au contraire à une réduction des matériaux 1a, 1b. La substance active 16 peut réagir avec les matériaux 1a, 1b qu'ils soient sous forme de gouttelettes 2 ou de particules solides 3. La substance active 16 est préférentiellement injectée dans le dispositif 200, au niveau de la chambre d'atomisation 400. Ainsi la substance active 16 réagit avec les particules 3. Avantageusement la substance active 16 est impliquée dans l'étape de pulvérisation 120. De cette manière la substance active 16 réagit avec les gouttelettes 2. Alternativement, la substance active 16 est également injectée au niveau du moyen de pulvérisation 300. Les pressions partielles du gaz neutre et de chaque composé actif de la substance active 16 sont contrôlés au sein du dispositif 200 pendant toute la durée du procédé 100 de sorte que la teneur de chaque composé actif reste comprise entre 5 ppm et 20000 ppm et de préférence entre 5 ppm et 1000 ppm. Les réactions chimiques se déroulant entre la substance active 16 et la surface des gouttelettes 2 et des particules 3 permet d'optimiser la surface d'échange. De cette manière l'étape d'enrichissement 160 est réalisée de manière efficace. Ainsi l'étape d'enrichissement 160 permet de contrôler la composition chimique finale des particules 3 résultantes.

Puis, il y a une étape de séparation des particules solides et de collecte 140 des particules solides 3 de façon à former la poudre 5. Cette étape est d'abord réalisée au moyen du premier moyen de collecte 500 qui connecté à la chambre d'atomisation 400. En référence à Fig1, le premier moyen de collecte 500 comprend un pot principal 520 configuré pour recevoir une première partie des particules solides 3 formant ainsi la poudre 5. Ensuite un système de séparation gaz/particules, non représenté, est configuré pour séparer la deuxième partie des particules 3 du mélange de gaz 13. Cette deuxième partie de particules est formée principalement de particules les plus légères. Le système de séparation gaz/particules peut par exemple être un moyen de filtration, un décanteur ou encore un cyclone.

Dans la figure 2, le procédé de fabrication 100 présenté schématiquement comporte plusieurs étapes combinables, en traits pointillés, qui vont maintenant être décrites. Une étape d'ionisation 150 peut-être combinée avec l'étape d'enrichissement 160 afin d'améliorer la cinétique des réactions chimiques prenant place entre les gouttelettes 2, les particules 3 et la substance active 16. L'étape d'ionisation 150 précède l'étape d'enrichissement 160, auquel cas l'étape d'enrichissement peut débuter lors de la pulvérisation 120. Dans cette étape, la substance active 16 peut être introduite dans l'enceinte 311 du moyen de pulvérisation 300 de façon à être ionisée par l'arc électrique 314. L'arc électrique 314 ionise chaque composant de la substance active 16 de façon à créer des ions libres réactifs. Les ions libres réactifs, très énergétiques, améliorent la cinétique des réactions lors de l'étape d'enrichissement 160. Les réactions d'enrichissement s'équilibrent donc avant que les gouttelettes 2 soient solidifiées. Ainsi, la composition chimique des particules 3 résultantes est maîtrisée et reproductible. La concentration d'ions libres réactifs est la plus élevée au sein de l'enceinte 311. En dehors de l'enceinte la concentration d'ions libres réactifs diminue du fait des réactions de recombinaison. Avantageusement les ions libres réactifs suivent la trajectoire des gouttelettes 2 dans la chambre d'atomisation 400 afin d'augmenter la durée de l'étape d'enrichissement 160.

À la suite de l'étape de collecte 140, l'étape de passivation 170 de la surface des particules 3 peut être réalisée, par exemple, dans le cas où les première et deuxième poudres 5 sont fabriquées à partir de matériaux inflammables, c'est à dire ayant une forte affinité avec l'oxygène. C'est par exemple le cas avec les poudres 5 formées à partir de titane, d'alliages de titane ou d'aluminium. L'étape de passivation 170 est réalisée au moyen du gaz de passivation 14. Le gaz de passivation 14 peut par exemple comporter un gaz noble et un gaz actif tel que de l'oxygène, le gaz actif ayant préférentiellement une concentration comprise entre 20 ppm et 2 %. L'étape de passivation 170 est réalisée systématiquement sur les deux poudres 5. Dans l'exemple suivant, nous présentons la réalisation de l'étape de passivation 170 sur la première poudre 5 dans le premier moyen de collecte 500. L'étape de passivation 170 est transposable au système de séparation gaz/particules.

Afin d'obtenir une première et une deuxième poudre 5 répondant à des caractéristiques de distribution granulométrique, une étape supplémentaire de tamisage 180 peut être réalisée sur la première et la deuxième poudre 5. Le tamisage 180 permet par exemple de débarrasser les poudres 5 des agrégats de particules 3 ou des particules 3 dépassant une taille limite. La distribution granulométrique peut être caractérisée par trois diamètres particuliers notés D10, D50 et D90. 10 % des particules 3 ont un diamètre inférieur à D10, 50 % des particules 3 ont un diamètre inférieur à D50 et 90 % des particules 3 ont un diamètre inférieur à D90. Le tamisage 180 peut par exemple être réalisé afin d'ajuster la distribution des poudres 5, notamment le diamètre D50, correspondant à la médiane de la distribution.

Afin que la composition chimique des poudres 5 soit reproductible, le dispositif de fabrication 200 peut subir une étape supplémentaire d'inertage 101. L'étape d'inertage 101 est réalisée au moyen d'un gaz d'inertage et de cycles de compressions et de détentes, afin de purger l'air contenu dans le dispositif 200 jusqu'à ce que la teneur en oxygène soit inférieure à 100 ppm, préférentiellement inférieure à 10 ppm, avant de démarrer l'étape de fusion 110. Le gaz d'inertage peut par exemple comporter un gaz neutre ou un mélange de gaz neutres.

Habituellement, dans ce procédé le régime de transfert utilisé est un régime de transfert par pulvérisation. On obtient ainsi un arc électrique 314 continu au moyen d'un courant électrique continu lors des étapes de fusion et de pulvérisation. En outre, on obtient une longueur d'arc électrique 314 maintenu tant que du fil de matériau 1a, 1b est distribué. Cependant les rendements obtenus par ce procédé de fabrication de poudre ne sont pas assez satisfaisants, en effet la répartition granulométrique n'est pas suffisamment contrôlée. Il peut ainsi résulter de ce procédé une quantité trop importante de particules fines, c'est-à-dire des poudres dont la taille est inférieure à 1 micron. Par ailleurs, les inventeurs ont constaté que ce procédé induit une forte montée en température, et donc la poudre a tendance à s'oxyder. En outre, parfois la poudre se fritte.

Les inventeurs ont ainsi cherché à éviter ces inconvénients. Ils ont alors réduit la tension du courant électrique appliqué, tout en maintenant un apport de matériau constant, pour réduire la longueur de l'arc électrique 314 et obtenir des poudres 5 présentant un diamètre plus grand. Le régime de transfert est alors passé à un régime de transfert par court-circuit. Dans ce régime par court-circuit, les inventeurs ont constaté une considérable amélioration du contrôle de la répartition granulométrique des poudres 5. Dans ce régime de transfert, le courant électrique appliqué n'est plus un courant électrique continue, c'est un courant de court-circuit. Ainsi lors de l'étape de fusion, la chaleur de l'arc électrique 314 fait fondre l'extrémité des fils 313a, 313b jusqu'à former une goutte 2 et les deux fils 312a, 312b vont alors être connectés. Un pont liquide est aussi formé entre les deux fils 312a, 312b et la gouttes 2. C'est à ce moment qu'un court-circuit est créé, la tension du courant électrique appliquée est alors égale à 0 V. En référence à Fig. 3, le courant électrique appliqué est régulé par une augmentation de l'intensité du courant appliqué. À cet instant, l'augmentation de l'intensité, induite par le court-circuit, génère des champs électromagnétiques qui, avec l'effet de la tension de surface, vont couper le pont liquide entre les fils 312a, 312b et la goutte 2. La rupture du pont entraîne des projections de gouttelettes 2 lors de l'étape de pulvérisation, ces gouttelettes 2 formant par la suite la poudre 5. Selon la rapidité de l'augmentation de l'intensité, la formation de grosses gouttes 2 est évitée. Ainsi la répartition granulométrique des poudres 5 est mieux contrôlée. Les poudres 5 produites comprennent notamment moins de poudres fines que les poudres 5 produites avec pour un régime de transfert par pulvérisation. Par ailleurs la poudre est moins polluée et la composition obtenue est aussi mieux contrôlée. En effet, le court-circuit permet de limiter la montée en température. Le phénomène d'oxydation des poudres est alors moins important, la composition est donc mieux contrôlée. Ensuite, après la pulvérisation de la gouttelettes 2, la tension se rétablit, ce qui crée à nouveau un arc électrique 314 et le cycle de fusion et de pulvérisation est de nouveau initié.

Dans un mode de réalisation, la tension appliquée entre les deux fils conducteurs 312a, 312b peut être comprise entre 10 V et 30 V, de préférence entre 11 V et 20 V, de préférence encore entre 14 V et 19 V. La longueur de l'arc électrique 314 induite par l'application du courant électrique sur les deux matériaux 1a et 1b est plus petite que celle pour un régime transfert par pulvérisation. Ces plages de valeurs permettent de garantir une granulométrie contrôlée, c'est-à-dire une répartition granulométrique souhaitée par l'utilisateur du procédé. En effet, si la tension est trop faible, la goutte 2 de métal ne peut plus se détacher et les fils conducteurs 312a, 312b risquent de se lier. Il n'y a alors pas de court-circuit. Si la tension est beaucoup trop faible, l'arc électrique 314 n'est pas créé et les fils 312a, 312b se dévident dans créer de gouttes. Au contraire si la tension est trop importante, la répartition granulométrique des poudres et la composition de la poudre ne seront pas satisfaisantes. En effet la granulométrie des poudres peut être trop hétérogène et/ou présenter des particules de poudre 5 trop fines, de diamètre trop petit par exemple de taille inférieure à 1 micron. Par ailleurs la qualité de la poudre peut être impactée, avec de fortes tensions, un phénomène de condensation peut se produire, générant des nanoparticules qui sont projetées. Les inventeurs ont d'ailleurs observé au moyen d'un microscope à balayage électronique, que des agglomérats de nanoparticules, issus de ces projections, viennent se fixer sur la surface de particules plus grosses. Ces nanoparticules ou projections augmentent la surface d'échanges des particules 5 produites et ses projections contribuent ainsi à une augmentation du taux d'oxygène dans la poudre produite 5,6. La poudre à fabriquer est par exemple une poudre de Ti6Al4V, et les matériaux 1a et 1b sont des alliages de titane Ti6Al4V. Dans un mode de réalisation de la poudre de Ti6Al4V, la tension est de comprise entre 15 et 19 V, de préférence 16 V. Il a été constaté que ce procédé permet d'atteindre des poudres conformes aux spécifications définies dans les normes ASTM F3001-14 et ASTM F2924-14.

Dans un mode de réalisation, la fréquence du court-circuit est comprise entre 40 et 200Hz. En outre si la tension appliquée est augmentée, la fréquence du court-circuit peut être réduite. Ces valeurs de fréquence permettent d'améliorer la qualité de la poudre 5 élaborée. La poudre à fabriquer est par exemple une poudre de Ti6Al4V, et les matériaux 1a et 1b sont des alliages de titane Ti6Al4V. Il a été constaté que ce procédé permet d'atteindre des poudres conformes aux spécifications définies dans les normes ASTM F3001-14 et ASTM F2924-14. Par ailleurs, la répartition granulométrique est mieux contrôlée.

Dans un mode de réalisation, lesdites étapes de fusion et de pulvérisation sont réalisées sous gaz neutre, par exemple sous argon, à une pression comprise P entre 4 et 12 bar. En diminuant la pression P, les gouttelettes 2 formées ont un diamètre qui augmente. De préférence dans un mode de réalisation, la pression P est entre 6 et 10 bar. Cette plage de pression P permet notamment d'obtenir une distribution granulométrique adaptée aux procédés de fabrication mettant en œuvre des poudres métalliques adaptés tels que la fusion laser sur lit de poudre, la fusion par faisceau d'électrons.

Dans un mode de réalisation, le courant électrique appliqué entre les deux fils conducteurs 312a, 312b présente une intensité du courant comprise entre 50 et 400 A, de préférence entre 150 et 250 A, de préférence encore entre 180 et 220 A.

Dans un mode de réalisation, les premier et deuxième matériaux 1a, 1b sont distribués à une vitesse de distribution et ladite intensité du courant est déterminée en fonction de ladite vitesse de distribution desdits premier et deuxième matériaux 1a, 1b. Ainsi la productivité du procédé de fabrication peut être ajustée.

Dans un mode de réalisation, ledit premier et deuxième matériau sont distribués à une vitesse comprise entre 5 et 10 m/min. Ainsi les contraintes mécaniques induite dans le fil sont réduites. Par ailleurs, si la vitesse est beaucoup trop importante, le fil 312a, 312b n'aurait pas le temps de fondre et si la vitesse est beaucoup trop faible l'arc électrique 314 est interrompu.

Dans un mode de réalisation, lorsque ladite première tension est égale à 0, l'intensité du courant augmente entre 100 % et 150 % pendant ladite étape de pulvérisation.

Dans un mode de réalisation, les étapes de fusion et de pulvérisation sont répétées au moins une fois et ledit courant électrique appliqué présente une deuxième tension différente de ladite première tension. Ainsi la granulométrie de la poudre fabriquée est parfaitement maitrisée.

Dans un mode de réalisation, le procédé de fabrication 100 comprend une étape additionnelle d'analyse de la poudre pour déterminer la densité de ladite poudre et/ou la teneur en oxygène de ladite poudre et/ou la granulométrie de ladite poudre. Ainsi les paramètres du procédé peuvent être ajustés en fonction de l'analyse de la poudre.

Nous allons maintenant décrire un résultat obtenu par le procédé selon l'invention. Dans un exemple, le matériau 1a, 1b utilisé est un alliage de titane Ti6Al4V. Le régime utilisé et un régime de court-circuit. La tension du courant électrique appliquée est fixée à 16 V. L'intensité cible du courant est fixée à 200 A et la pression P à 8 bar. Le diamètre du fil utilisé est 1,6 mm. Le procédé a permis d'obtenir une poudre 5 conforme aux spécifications de compositions des normes ASTM F3001-14 et ASTM F2924-14, ainsi qu'aux spécifications de densité apparente définie par la norme ASTM-B-212 ou encore de coulabilité définie par la norme ASTM-B-213. Le procédé de l'invention permet d'obtenir une répartition granulométrique des poudres mieux contrôlée. Ainsi au moins 75% des particules des poudres présente une taille inférieure à 150 microns. En outre au moins 50% des particules des poudres une taille entre 20 et 100 microns, ce qui est la taille des poudres communément utilisées dans les procédés de fabrication additive mettant en œuvre des poudres métalliques. Plus particulièrement, plus de 20% des particules de poudres 5 présente une taille entre 20 et 63 microns. C'est-à-dire une taille adaptée au procédé de fusion laser sur lit de poudre. Plus de 25% des particules de poudres 5 présente une taille entre 63 et 100 microns. C'est-à-dire une taille adaptée au procédé de fusion par faisceau d'électron.

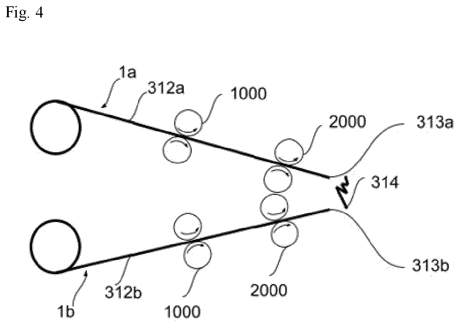

Dans un mode de réalisation, le procédé de l'invention comporte une étape de distribution supplémentaire. En référence à Fig. 1 et Fig. 4, avant l'étape de fusion les fils 312a, 312b stockés sous forme de bobines de fil, sont distribués chacun en amont du dispositif de fabrication 200 par un moyen de dévidage 1000, par exemple des galets. Les fils 312a, 312b sont distribués chacun dans une direction de distribution, c'est-à-dire de la bobine vers l'arc électrique 314. Ces moyens de dévidage 1000 sont situés après les bobines dans la direction de distribution. Les moyens de dévidage 1000 permettent de pousser les fils 312a, 312b vers le dispositif de fabrication 200.

Puis au plus proche de l'arc électrique 314, au moins un moyen additionnel 2000 de dévidage est ajouté au dispositif pour chaque fil 312a, 312b distribué. Le moyen additionnel 2000 au dévidage permet une stabilisation du fil 312a, 312b en le tirant puis en le poussant vers l'arc électrique 314, par exemple au moyen de galets.

Le moyen de dévidage 1000 et le moyen additionnel 2000 forment ensemble un dévidoir poussé-tiré, ou système push-pull en anglais. Les fils 312a, 312b sont ainsi poussés sur une distance D dans la direction de distribution. Cette distance D est la longueur mesurée entre le moyen de dévidage 1000 et le moyen additionnel de dévidage 2000. Puis les fils 312a, 312b sont tirés à partir du moyen additionnel 2000 de dévidage vers l'arc électrique 314 dans la direction de distribution. Puis les fils 312a, 312b sont poussés à partir du moyen additionnel 2000 de dévidage vers l'arc électrique 314, jusqu'à l'extrémité des fils 313a, 313b. Le moyen de dévidage 1000 et le moyen additionnel 2000 sont synchrones, c'est-à-dire qu'ils distribuent le fil à la même vitesse. Ce dévidoir poussé-tiré permet de diminuer la prise en oxygène de la poudre fabriquée par le procédé 100.

Dans un mode de réalisation, ledit premier fil 312a et ledit deuxième fil 312b présentent chacun une extrémité 313a, 313b qui est fondue lors de l'étape de fusion. Ledit premier fil 312a et ledit deuxième fil 312b sont poussés chacun sur une distance L, chaque distance L étant égale à la longueur mesurée entre ledit moyen additionnel 2000 et ladite extrémité 313a, 313b respective des fils 312a, 312b. Ainsi il y a moins d'à-coups mécaniques sur le fil 312a, 312b. Ainsi la teneur en oxygène dans les poudres 5 fabriquée est plus faible que la teneur en oxygène obtenue sans le procédé de l'invention.

Dans un mode réalisation, ledit premier fil 312a et ledit deuxième fil 312b sont tirés sur une distance L égale à au moins de 1% de la distance D, de préférence égale à au moins 10% de la distance D. Ainsi la tension des fils 312a, 312b est bien maîtrisée. En outre la teneur en oxygène dans les poudres 5 fabriquée est plus faible que la teneur en oxygène obtenue sans le procédé de l'invention.

Par exemple, la longueur du fil entre le système de dévidage et l'arc électrique 314 est de 3 mètres. Le moyen additionnel au dévidage se situe à une distance entre 20 et 50 cm des extrémités 313a, 313b. L'homme du métier saura aisément régler ces distances à partir de l'enseignement de l'invention pour obtenir l'effet voulu, à savoir une teneur en oxygène dans les poudres 5 fabriquée plus faible que la teneur en oxygène obtenue sans le procédé de l'invention.

Dans un mode de réalisation, les fils 312a, 312b sont plus particulièrement poussés à travers des gaines. Les gaines sont situées après le moyen de dévidage 1000 dans la direction de distribution. Les gaines permettent de guider les fils 312a et 312b, et de minimiser les courbures des fils 312a, 312b. Ce guidage à travers les gaines permet d'éviter des déformations des fils 312a, 312b et donc de limiter des contraintes dans le matériau 1a, 1b. Dans un mode de réalisation, les gaines sont situées entre le moyen de dévidage 1000 et le moyen additionnel 2000, et ainsi les frottements dans les gaines sont aussi réduits. La distribution du fil est aussi mieux régulée.

Dans un mode de réalisation, la vitesse de fil de dévidage est comprise entre 5 et 10 m/min.

Dans un mode de réalisation, une étape supplémentaire de redressage permet de redresser les fils 312a, 312b au moyen d'un redresseur de fil. Ainsi les fils 312a, 312b sont bien rectilignes, sans déformation. Les efforts mécaniques dans les gaines sont moindres. En outre, la distribution est facilitée. Ainsi l'arc électrique 314 est bien maîtrisé, sans interruption. En outre, la qualité de la poudre en terme de composition est aussi mieux maîtrisée. La granulométrie et la sphéricité des poudres 5 sont mieux contrôlées.

## Revendications

1. Procédé de fabrication (100) de poudre (5) à partir d'un premier matériau (1a) et d'un deuxième matériau (1b), comprenant :
- une étape de fusion (110) des premier et deuxième matériaux (1a, 1b), au moyen d'un arc électrique (314) formé par l'application d'un courant électrique entre lesdits premier et deuxième matériaux (1a, 1b) ;
- une étape de pulvérisation (120) des premier et deuxième matériaux (1a, 1b) fondus de manière à former des gouttelettes (2) ;
- une étape de refroidissement (130) des gouttelettes (2) au moyen d'un gaz vecteur (11) de manière à former des particules solides (3) ;
- une étape de séparation des particules solides du gaz vecteur (11) et de collecte (140) des particules solides (3) de façon à former la poudre (5) ;
ledit procédé de fabrication (100) étant **caractérisé en ce que** pendant ladite étape de fusion un pont liquide est formé entre lesdits premier et deuxième matériau (1a, 1b) générant une augmentation de l'intensité du courant électrique appliqué et une chute de tension du courant électrique à 0 V de sorte que ledit courant électrique appliqué est un courant de court-circuit.

2. Procédé de fabrication (100) selon la revendication 1, **caractérisé en ce que** ledit courant électrique de court-circuit présente une première tension comprise entre 10 V et 30 V, de préférence entre 11 V et 20 V, de préférence encore entre 14 V et 19 V.

3. Procédé de fabrication (100) selon l'une quelconque des revendications précédentes, **caractérisé en ce que** le court-circuit présente une fréquence comprise entre 40 et 200 Hz.

4. Procédé de fabrication (100) selon l'une quelconque des revendications précédentes, **caractérisé en ce que** lesdites étapes de fusion et de pulvérisation sont réalisées sous gaz neutre, par exemple sous argon, à une pression (P) entre 4 et 12 bar, de préférence entre 6 et 10 bar.

5. Procédé de fabrication (100) selon l'une quelconque des revendications précédentes, **caractérisé en ce que** ledit courant électrique appliqué présente une intensité comprise 50 et 400 A, de préférence entre 150 et 250 A, de préférence encore entre 180 et 220 A.

6. Procédé de fabrication (100) selon la revendication 5, **caractérisé en ce que** lesdits premier et deuxième matériaux (1a, 1b) sont distribués à une vitesse de distribution et ladite intensité du courant est déterminée en fonction de ladite vitesse de distribution desdits premier et deuxième matériaux (1a, 1b).

7. Procédé de fabrication selon l'une quelconque des revendications précédentes, **caractérisé en ce que** ledit premier et deuxième matériau sont distribués à une vitesse comprise entre 5 et 10 m/min.

8. Procédé de fabrication (100) selon l'un des quelconques des revendications 2 à 7, **caractérisé en ce que** lesdites étapes de fusion et de pulvérisation sont répétées au moins une fois et ledit courant électrique appliqué présente une deuxième tension différente de ladite première tension dudit courant appliqué.

9. Procédé de fabrication (100) selon l'une quelconque des revendications précédentes, **caractérisé en ce qu'**il comprend une étape additionnelle d'analyse de la poudre pour déterminer la densité de ladite poudre et/ou la teneur en oxygène de ladite poudre et/ou la granulométrie de ladite poudre.

10. Procédé de fabrication (100) selon l'une quelconque des revendications précédentes, **caractérisé en ce qu'**il comprend une étape d'enrichissement (160) des gouttelettes (2) et/ou des particules (3) au moyen d'une substance active (16), mise en œuvre pendant l'étape de refroidissement (130), l'étape d'enrichissement (160) étant précédée d'une étape d'ionisation (150) de la substance active (16).

11. Procédé de fabrication (100) selon l'une quelconque des revendications précédentes, dans lequel l'étape d'enrichissement (160) est mise en œuvre pendant les étapes de pulvérisation et de refroidissement (120, 130).

12. Procédé de fabrication (100) selon l'une quelconque des revendications précédentes, dans lequel, outre le gaz vecteur (11), l'étape de refroidissement (130) est réalisée au moyen d'un gaz de refroidissement (12).

13. Procédé de fabrication (100) selon l'une quelconque des revendications 10 à 12, dans lequel la substance active (16) comprend :
- au moins un gaz neutre ; et
- au moins un composé actif comprenant au moins l'un des atomes suivants : oxygène, azote, carbone ou hydrogène ; chaque composé actif étant en phase gazeuse, liquide ou solide, la teneur de chaque composé actif étant comprise entre 5 ppm et 20000 ppm.
